# EUROPEAN PATENT SPECIFICATION

(11) **EP 2 157 884 B1**
(45) Date of publication and mention of the grant of the patent: **07.08.2013**
(21) Application number: 07748268.5
(22) Date of filing: 21.06.2007
(51) Int. Cl.: A47B 88/04, A47B 88/12, B60P 3/14, B62B 3/00

(54) **SHELF-BOX-SYSTEM AND METHOD OF MANUFACTURING A BOX OF SUCH SYSTEM**
REGALKASTENSYSTEM UND VERFAHREN ZUR HERSTELLUNG EINES KASTENS EINES SOLCHEN SYSTEMS
SYSTÈME DE BAC À BEC POUR RAYONNAGE ET PROCÉDÉ DE FABRICATION D'UN BAC À BEC D'UN TEL SYSTÈME

(43) Date of publication of application: 03.03.2010
(73) Proprietor: Modul-System HH AB, 431 22 Mölndal (SE)
(72) Inventor: CARLSSON, Anders, S-422 50 Hisings Backa (SE); GUSTAVSON, Dan, S-565 31 Mullsjö (SE)
(74) Representative: Somlo, Tommy
(86) International application number: PCT/SE2007/000605
(87) International publication number: WO 2008/156384

(56) References cited:
- DE-A1-102004 005 362
- US-A- 1 095 363
- US-A- 3 582 174
- US-A- 3 804 484
- US-A- 4 632 472
- US-A- 5 147 138

## Description

### Field of the Invention

The present invention relates to a shelf-box-system, for example for a cargo or a backspace shelf-system in an automotive vehicle, wherein said shelf-box-system comprises at least one shelf with at least one pull-out box thereon, said box has a first storage/transport position and at least a second exposure position along the pull-out direction of the box, said shelf-box-system further comprises at least one securing arrangement to secure said box to said shelf in the pull-out direction.

Furthermore, the present invention discloses a method of manufacturing a box of said shelf-box-system.

### Technical Background

It is common practise in the art of service vehicles to equip a cargo space or a back space of an automotive vehicle with for example cupboards, tool holders, shelves or other module units. Since, a back space or a cargo space is a limited area it is important to have a compact and flexible system, which is easy to handle in order to provide efficient storage. Often, boxes are placed on shelves to store smaller objects such as tools and spare parts etc. The boxes may be removed from the shelf and taken to for example a building site. The box may then be replaced on the same spot as before or to another shelf/area, where the user may want it. The boxes help the user to organise the working and storing space in the service vehicle and to make the system as flexible as possible.

However, these boxes need to be secured to the shelves both in the pull-out direction of the box and perpendicular to the shelf so that they do not unintentional slip out during transportation. They also need to be easy to handle when they are being used, irrespectively of the load and the space around them. These boxes are often loaded i.e. up to and/or above the top of the box with all kind of articles.

To solve the problem with the box unintentionally slipping out of the shelves it is common practise to have an upward bended front edge, which secures the box in the pull-out direction. The box is then lifted over the front edge and pulled outwardly to gain access to the content, this especially has to be done when a second shelf is arranged above the shelf of the box.

US 3 582 174 A discloses a shelf-box system, according to the preamble of claim 1, comprising a molded or vaccum-formed stackable plastic drawer partially rimmed and with a perpendicular front face, the rear rim having guide members that are central of the rim and the drawer bottom having central guide members and transversely spaced lock lugs to prevent removal of the drawer from its frame inadvertently.

DE 10 2004 005 362 discloses a shelf-box-system with a shelf with steering rails attached to it. The steering rail with a securing nose interacts with the box and secures the box to the shelf both in the pull-out direction and perpendicular to the shelf. The box is being secured in a first closed position and a second open position. To release the box from its securing position, the box is manually tilted over the securing nose and drawn out. The tilting operation together with the design and function of such a box-system may result quite cumbersome and thus occupying significant space. It is desirable to provide a system that enables compact storage and easy handling when using said boxes.

### Summary of the Invention

In view of the above, an objective of the invention is to solve or at least reduce the problems discussed above. Hence, the invention according to claim 1 discloses a shelf-box-system, for example for a cargo or a backspace shelf-system in an automotive vehicle, wherein said shelf-box-system comprises at least one shelf with at least one pull-out box thereon, said box has a first storage/transport position and at least a second exposure position along the pull-out direction of the box, said shelf-box-system further comprises at least one securing arrangement to secure said box to said shelf in the pull-out direction, wherein said box has at least one gripping groove, which extends in the pull-out direction in the lower region of said box, said gripping groove of said box is interacting with at least two securing elements, which are arrangeable at an adjustable distance in relation to one another in the pull-out direction of said box. Hence, not only is the securing of the box accomplished in a manner that enables a more compact shelf-box-system, it is also at the same time being adoptable to different shelves and shelf-box-systems.

An arrangement like this makes the system very flexible, since the securing elements are arrangable at an adjustable distance in relation to each other. The system may be placed to any shelf, independently of the depth of the shelves. The system may also be used to different kind of boxes, independently of the depth of the box.

Advantageously, said securing elements, are arranged to the shelf in local places in the pull-out direction of the box and each said securing element has a limited extension in the pull-out direction. If the securing elements are arranged in local places and both has a limited extension in the pull-out direction they may be placed on any shelf and used with any box, independently of the depth of the shelf and/or the box.

Said securing element may comprise a flange, which interacts with said gripping groove of said box. A flange gives the opportunity to give the securing element different forms. The securing element may have a contour/cross section of a T or an up-side-down L or any other kind of form suitable for the application.

Preferably, said securing element has a mushroom shape. A securing element, which has a mushroom shape, may be arranged to the shelf without any thoughts of assembly direction. The mushroom shape will also work as a guide when placing the box on the shelf or when the box is placed back on the shelf after being removed from the shelf

Said gripping groove may have a cross section, which at least partly follows the contour of said securing element. This helps the box to be positioned to the shelf in an easy way and to be perpendicular secured to the shelf.

Said gripping groove may be part of a groove, which extends in the pull-out direction of said box.

Advantageously, said box is secured to said shelf in its pull-out direction in its first storage/transport position by said securing arrangement. By securing the box in its first storage/transport position the box is secured during transportation so that it does not unintentionally slips out of the shelf. It could otherwise damage the interior of the service vehicle or the articles stored within the box. This also prevents the box from slipping out of its position when the vehicle is parked for example on a hillside.

Furthermore, said box may be secured to said shelf in its pull-out direction in its second exposure position by said securing arrangement. By securing the box in a second exposure position, the box may be drawn out to expose the articles inside it, without the box falling out of the shelf. The box may also be left in its exposed position, without any support from the user, even if the box is heavier loaded in the front than the back of the box. This also prevents the box from slipping out of its position when the vehicle for example is parked on a hillside.

Preferably, said securing arrangement is a spring action device. A spring action device will at least partly automatically secure or release the box to the shelf.

Advantageously, said securing arrangement is manually manoeuvrable.

Preferably, said securing arrangement is arranged adjacent to the front edge of the shelf and interacts with at least one point of arrival on the box. By arranging the securing arrangement adjacent to the front, it is easy for the user to release the box.

Said point of arrival on said box may be a stop on the underside of said box.

Alternatively, said point of arrival on the box may be a stop arranged in said groove or in said gripping groove of the box.

The invention according to claim 14 discloses a tool cart with said shelf-box system, said tool cart comprises a trolley carrying a tool cupboard, said trolley having a frame work comprising a handle and wheels provided on one shaft. A toolcart is capable of carrying appropriate tools for specific tasks as well as different types of material and/or equipment. This provides for improved mobility and yet less need for making numerous trips to and from a vehicle. The use of cupboards provides for the possibility of prearranged cupboards containing all necessary equipment and tools for a specific task and hence installation work may be conducted with high efficiency.

Advantageously, said tool cart is provided with at least one releasable retaining element engaging said frame work between said handle and wheels, said at least one releasable retaining element holding said tool cupboard in place in a retained condition. The cupboard of the tool cart may easily be replaced, by releasing the retaining element, and the tool cart may be used for e.g. moving other articles if desired.

### Brief Description of the Drawings

The above, as well as additional objects, features and advantages of the present invention, will be better understood through the following illustrative and nonlimiting detailed description of preferred embodiments of the present invention, with reference to the appended drawings, where the same reference numerals will be used for similar elements, wherein:
Fig. 1 discloses an open-up perspective view of a service vehicle with a shelf-system and a tool cart with a built in shelf-box-system according to the invention.
Fig. 2 discloses a perspective view of an embodiment of the shelf-box-system according to the invention, with only the half box showing.
Fig. 3 discloses a cross section of I-I in figure 2 of the shelf-box-system.
Fig. 4 discloses a cross section of II-II in figure 2 of the shelf-box-system in a first position.
Fig. 5a and 5b discloses the shelf-box-system in Fig. 4 in a second position.
Fig. 6a and 6b discloses the shelf-box-system in Fig. 4 in a third position.
Fig. 7a discloses a perspective view of a tool cart with a shelf-box-system according to the present invention.
Fig. 7b discloses a perspective view from behind of a tool cart.
Fig. 8 is a schematic perspective view of a tool cart, during transport.

### Detailed Description of Preferred Embodiments

A currently preferred embodiment of the present invention will now be described in more detail, with reference to the accompanying drawings, wherein:

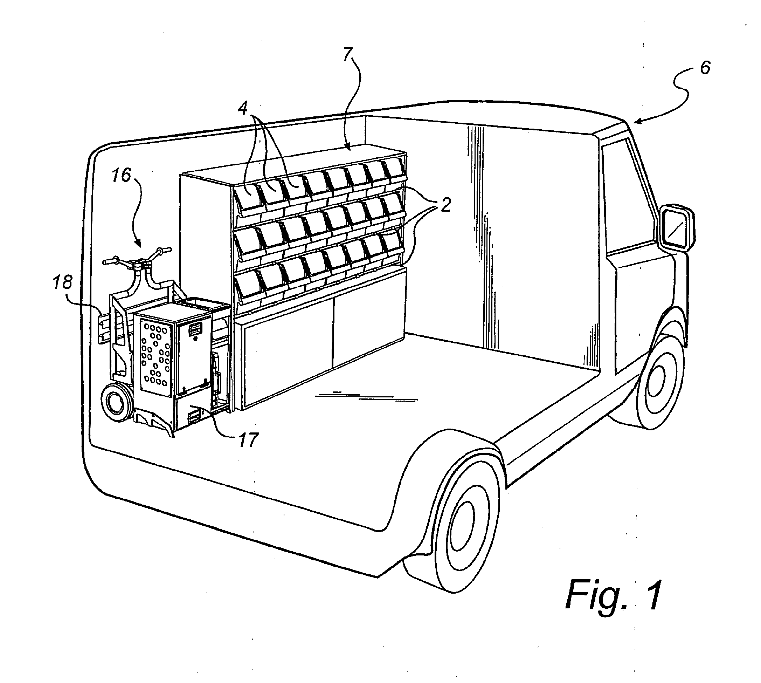

Fig. 1 shows an automotive vehicle 6 for example a service vehicle with a back or a cargo space where a module 7 with a set of shelves 2 is arranged. The automotive vehicle will hereafter be referred to as the service vehicle, however it is not limited to this. On the shelves 2 boxes 4 are arranged with aid of securing elements (not shown). Fig. 1 also shows a tool cart 16 carrying a cupboard 17. A wall rail 18 is positioned on the wall along the longitudinal direction of the vehicle 6. The wall rail 18 of the service vehicle 6 may be provided with holding means (not shown) adapted to hold the tool cart 16 so as to maintain the tool cart 16 in position from primarily sideways movement.

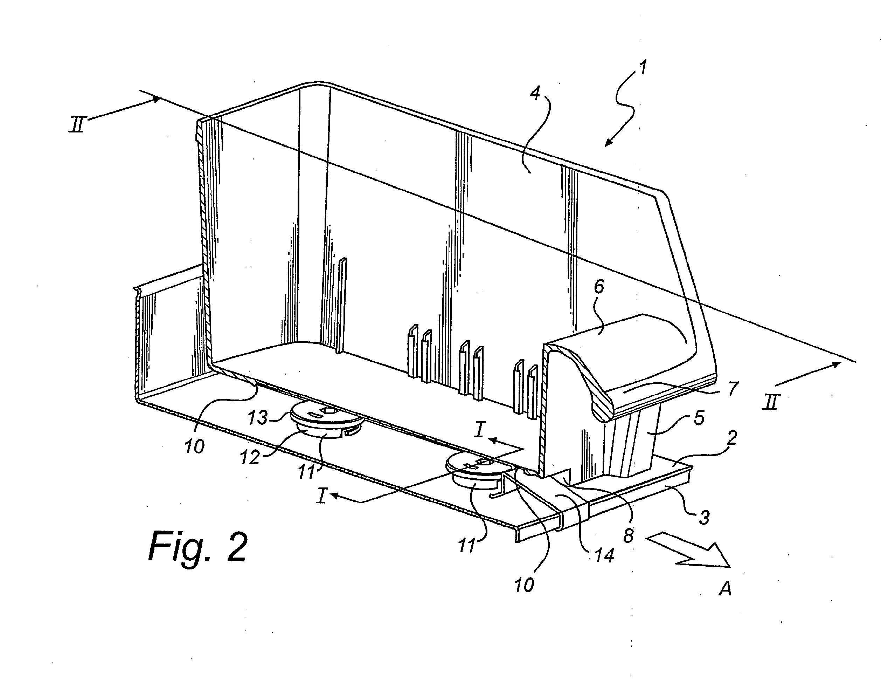

Fig. 2 shows the shelf-box-system 1 in a transportation position. On a shelf 2 is a box 4 arranged. The box 4 is a quadrangular plastic box, can however be made of any material or manufactured in any form. The box 4 has a front part 5, which is directed to the front edge 3 of the shelf 2 when the box 4 is placed on the shelf 2. The front part 5 of the box 4 has a lower wall section 6 than the rest of the box 4. The lower section enable easier access and insight to the articles stored in the box 4. However, in order to provide a high degree of storing area a separate wall part (not shown) may be arranged above the lower wall section 6. This wall part may be transparent to enable the user to see what is stored in the box, without pulling the box 4 out of the shelf 2. The box 4 also has a handle 7, which can be gripped around in order to pull the box 4 out of the shelf 2. However, the handle 7 may be designed differently or the box 4 may have no handle at all. In the lower region of the box 4 is a groove 8 arranged, which extends in the pull-out direction A of the box 4. It extends over the whole length of the box 4 in its pull-out direction A, and is arranged to the middle of the box 4. However, it is not limited to this, it may be shorter and positioned anywhere within the external bound of the box 4. The groove 8 in the box 4 is not limited to be only one groove. It may be several grooves 8 within one box 4. The groove 8 positions the box 4 on the shelf 2 with the aid from securing elements 11.

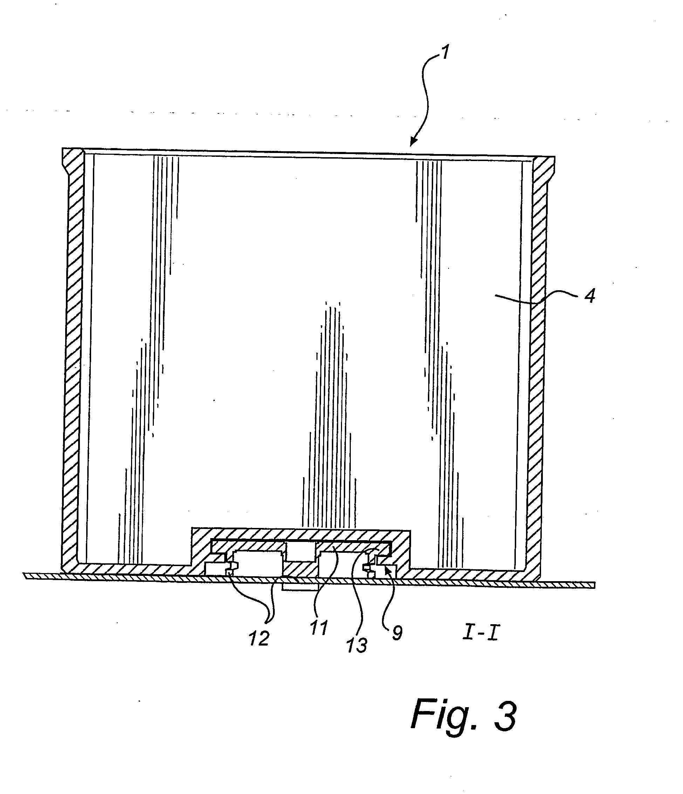

On the shelf 2 is two securing elements 11 arranged in a line in the pull-out direction A. One is arranged near the front edge 3 of the shelf 2 and the other one further back on the shelf 2. The distance between the two securing elements 11 may vary, depending on the depth of the shelf and/or the length of the box 4. The securing element 11 has a mushroom shape where the stem 12 is arranged to the shelf 2 through any kind of fixing arrangement, for example screws, bayonet coupling etc. The cap 13 of the mushroom shaped securing element 11 interacts with the groove 8 in the box 4 to position the box 4 on the shelves 2. Part of the groove 8 in the box 4 has a gripping part, hereafter called the gripping groove 9 (See fig. 3), which extends at least partly over the length of the box 4 in the pull-out direction. The gripping groove 9 grips under the cap 13 of the securing element 11 to secure the box 4 perpendicular to the shelf 2 (see fig. 3). The number of securing elements 11 is not limited to two. It shall be noted that the securing element 11 does not have to have an approximately round mushroom form. The stem 12 may for example be round/oval/quadrangular/ angular etc. and the same goes for the cap 13. The securing element 11 may have an up-side-down L-like shape or a T-shape or any other shape with a flange, where the flange interacts with the gripping groove 9. The flange/cap 13 of the securing element 11 may be formed from one or several protruding elements, which alone or together function as a flange.

It is preferably that the interconnection between the shelf 2 and the securing element 11 is easy to achieve and release, since it would have an effect on the flexibility of the shelf-box system 1 if the securing element 11 easily could be moved. The boxes could then easily be placed elsewhere and still be secured to its underground. The shelf 2 may be provided with premanufactured fixing areas for example holes to which the securing element 11 may be arranged.

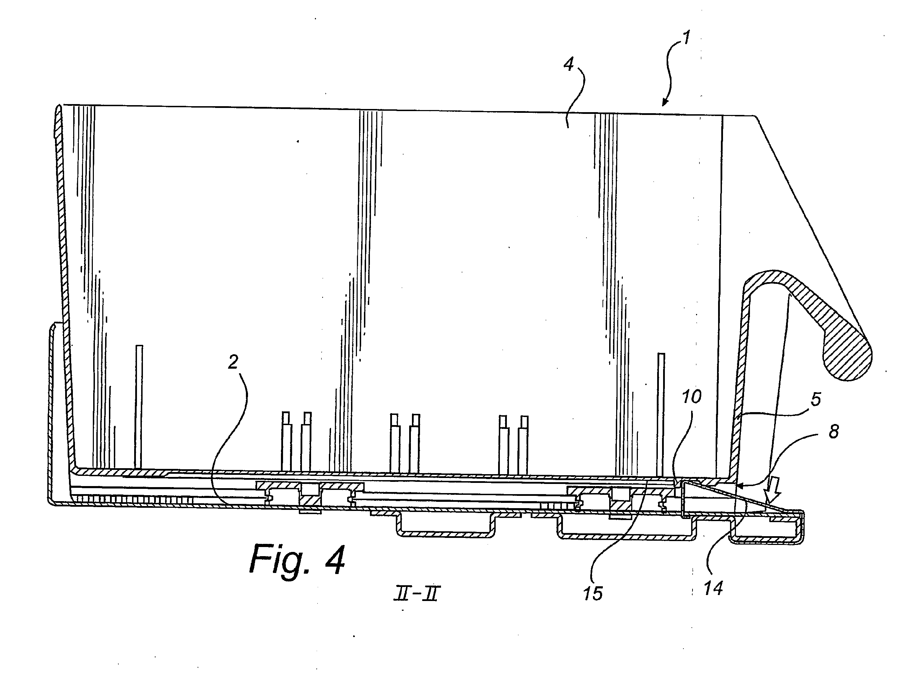

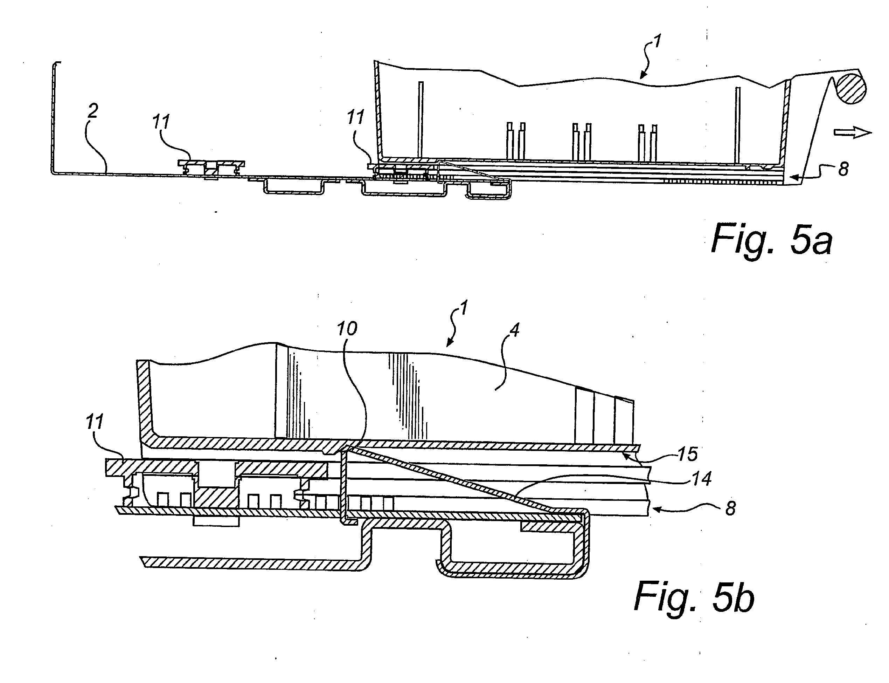

At the front 3 of the shelf 2 is a securing arrangement 14 arranged in the same line as the securing elements 11 in the pull-out direction A. The securing arrangement 14 is a flat metal spring, which interacts with the box 4. However, it is not limited to be a flat metal spring. It may be any kind of securing arrangement known in the art and it is not limited to be arranged adjacent to the front 3 of the shelf 2 or in the same line as the securing elements 11 in the pull-out direction A. The box 4 has two stops 10 arranged in the groove 8. These stops 10 will secure the box 4 to the shelf 2 in the pull-out direction A in two positions. The first position is the transportation position (Fig. 4) and the second one is an exposure position (Fig. 5). The stops 10 do not have to be integrated in the groove 8, they may for example be recessed on the underside of the box 4, i.e. separated from the groove. The number of securing positions is not limited to only two. The securing arrangement 14 is arranged to the shelf through an integrated clip. However, it may be arranged to the shelf 2 with known fixing devices for example screws. It is preferable if the interconnection is easy to achieve and to release in order to be able to change the position of the box and its securing system in a flexible way. Alternatively, the securing arrangement 14 may be arranged to the box 4 and interact with the shelf 2 in order to secure the box 4 in the pull-out direction A.

Fig. 3 shows the shelf-box-system 1 in a cross section. The cross section shows how the gripping groove 9 of the box 4 interacts with the cap 13 of the securing element 11. The contour of the gripping groove 9 follows the contour of the securing element 11. However, it is not necessary that the whole contour of the gripping groove 9 follow the contour of the securing element 11. It is only preferably that the flange/cap 13 of the securing element 11 is gripped under by the gripping groove 9 in some way to secure the box 4 perpendicular to the shelf 2. In this case the contour of the gripping groove 9 is the same over the whole length. However, it is not limited to this.

Fig. 4 shows the shelf-box-system 1 when the box 4 is in its first position i.e. storing and transportation position. The securing arrangement 14 i.e. the flat metal spring interacts with the stop 10, which is arranged in the groove 8 near the front 5 of the box 4. The stop 10 is a stop nose extending from the bottom part 15 of the groove 8 in the direction towards the shelf 2 /the underside of the box 4 . To release the box 4 the user may push the flat metal spring 14 downwards the shelf. The box 4 may then be drawn out. Alternatively to the stop 10 near the front 5 of the box 4, the stop may be on the front side 5 of the box 4.

Fig. 5a shows the shelf-box-system 1 when the box 4 is in its second exposure position. Fig. 5b shows an enlarged view of the securing arrangement 14 i.e. the flat metal spring interacting with the second stop 10, which is arranged in the groove 8 of the box 4 near the back of the box 4. The stop 10 is a stop extending from the bottom part 15 of the groove 8 in the direction towards the shelf 2/the bottom part of the box 4. However, the second stop may not extend so far that it collides with the securing elements 11, at least not the one at the back of the shelf 2, otherwise the box 4 may not be able to be pulled out.

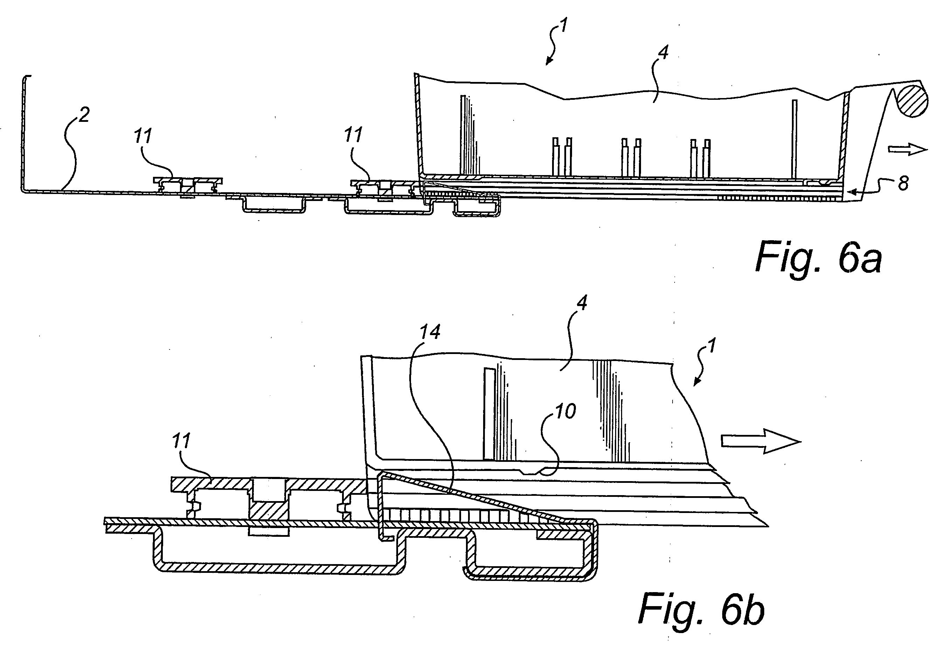

Fig. 6a shows the shelf-box-system 1 when the box 4 is being released from its second exposure position so that the box 4 can be taken off the shelf 2. Fig. 6b shows an enlarged view of the securing arrangement 14 i.e. the flat metal spring being pushed down when the box 4 drawn out. The pull-out force have to exceed the resistance from the stop 10. Alternatively, the flat metal spring 14 may be pushed down with an aid of a for example a finger. To replace the box 4 to the shelf 2 the groove 8, 9 of the box 4 has to be positioned to slide over the securing elements 11. The securing arrangement 14 will automatically be pushed down under the weight of the box and rebound to its securing positions.

The securing elements 11 do not have to be in the same size. For example the one in the front may be higher than the one in the back in order to act as a full stop for the box 2 when it interacts with the second stop 10 on the back of the box 4. The box 4 will then not be able to be taken out of the shelf 2. Another alternative is that securing element 11 in the back of the shelf is smaller than the one in the front and the contour of the groove narrows of from the front of the box 4 to the back of the box 4 so that the front securing element 11 interacts with the narrowing groove in a second position.

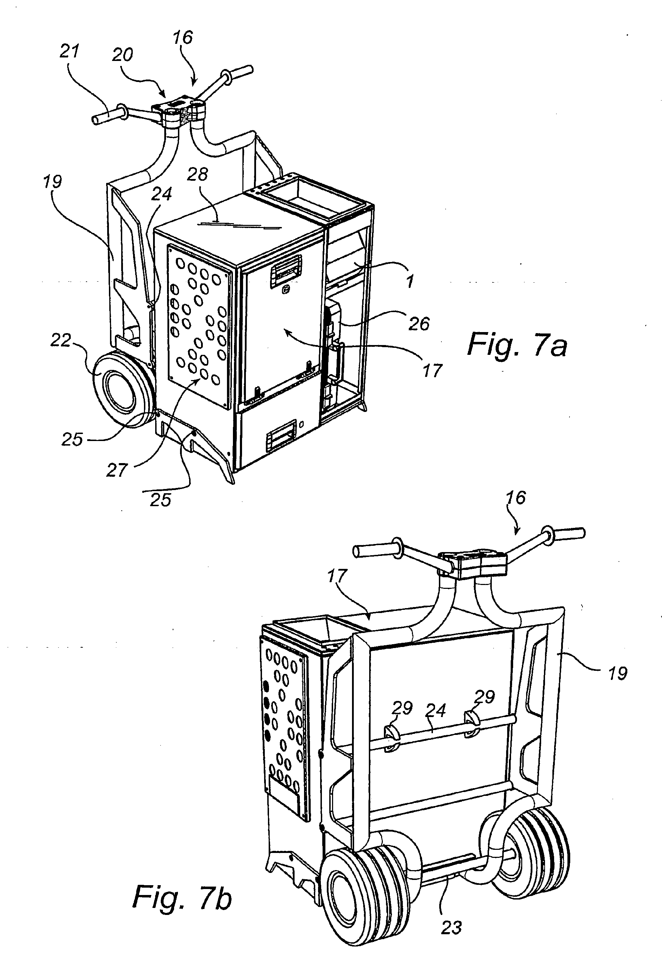

Fig 7a shows a tool cart trolley 16. The trolley comprises a frame work 19 with a handle 20 at a top portion. The handle 20 has a grip 21 for each hand of an intended user. The wheels 22 are arranged on a wheel shaft (not shown in fig. 7a, 23 in Fig 7b). The frame work 19 furthermore comprises crossbeams 24 for providing stability. Finally, pins 25 may be used for securing a cupboard 17 in retained condition to the tool cart 16. The tool cupboard is conventionally a part of a module system installed in a vehicle and composed for the performance of a certain task. The cupboard 17 may have pockets or shelves for the shelf-box-system 1 of the present invention or for tool boxes 26. The cupboard may also be provided with a sidewall 27 in which holes are provided enabling storing of tools or equipment hanging in a hole. The cupboard 17 may also be provided with space for drawers kept behind a cupboard door. Moreover, the cupboard may be provided with a hinged lid 28 for enabling opening and reach of tools or similar from above.

It is realized by the skilled person that the tool cart 16 is readily adapted to carry and retain any kind of cupboard 17. As long as the tool cupboard 17 has a bottom, side walls 27 that form pockets of various sizes with openings towards the front of the tool cupboard it may readily be secured and retained to the tool cart 16.

With reference to fig. 7b it is disclosed a way of retaining said cupboard 17 to said tool cart 16. Retaining elements 29 are positioned on the back of the cupboard 17 for engagement with a crossbeam 24 of the frame work 19 of the tool cart 16. The retaining elements 29 are made with a small amount of flexibility in order to provide a snap function and thus the cupboard 17 is held against movement in at least the vertical direction. It may be that according to an alternative embodiment (not shown) the frame work comprises said retaining element and being connectable to said tool cupboard 13. It is considered that once the skilled person having realized the improvement of using a realisably retained cupboard taken from a module system of a service vehicle for a tool cart during installation work, service work or at building sites the skilled man readily may realize several alternative retaining elements 29 capable of providing a releasable retaining effect of the cupboard 17.

Furthermore, it is realised that this enables improved access to working sites. In addition loading and unloading operations of a service vehicle is facilitated due to that the tool cart 16 may carry holding means attachable to a lift (not shown) of a service vehicle 6, thus enabling lifting operations. The lift may be of conventional type often used for handicapped people or a specially adapted crane for enabling lifting operations of the tool cart 16, especially when fully loaded. It is also possible to perform a manual lift into or out of a service vehicle 6. A ramp or loading bridge is alternatively used in order to facilitate loading or off loading.

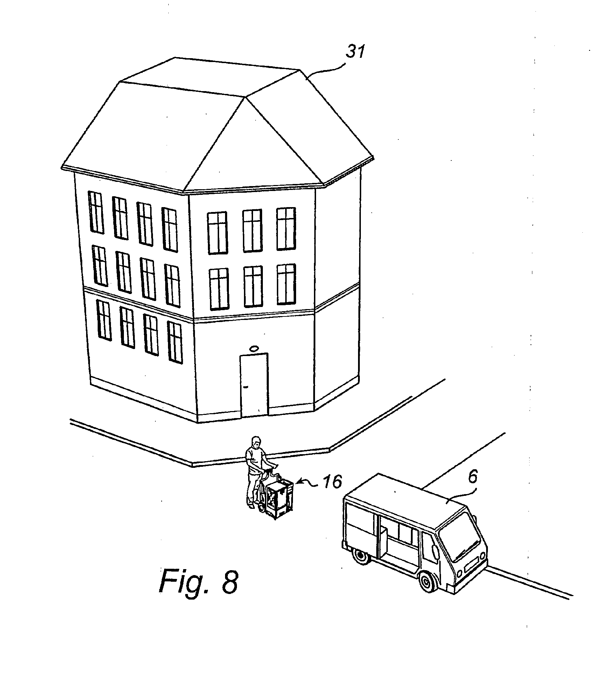

Fig. 8 shows a service vehicle 6 at a distance from a working site 31. The fundamental idea is to enable a large carrying capacity of a tool cart 16 for a worker and at the same time provide means for avoiding numerous journeys back and forth in order to pick up more material, equipment or tools.

The invention has mainly been described above with reference to a few embodiments. However, as is readily appreciated by a person skilled in the art, other embodiments than the ones disclosed above are equally possible within the scope of the invention, as defined by the appended patent claims. Furthermore, the features described in association with different embodiments and aspects of the invention may be combined within the claimed scope in order to enable further embodiments not explicitly disclosed.

## Claims

1. Shelf-box-system (1), for example for a cargo or a backspace shelf-system (7) in an automotive vehicle (6), wherein said shelf-box-system (1) comprises at least one shelf (2) with at least one pull-out box (4) thereon, said box (4) has a first storage/transport position and at least a second exposure position along the pull-out direction of the box (4), said shelf-box-system (1) further comprises at least one securing arrangement (14) to secure said box (4) to said shelf (2) in the pull-out direction (A) **characterised in that** said box (4) has at least one gripping groove (9), which extends in the pull-out direction in the lower region of said box (4), said gripping groove (9) of said box (4) is interacting with at least two securing elements (11), which are arrangeable at an adjustable distance in relation to one another in the pull-out direction of said box (4).

2. Shelf-box-system (1) according to claim 1, in which said securing elements (11), are arranged to the shelf (2) in local places in the pull-out direction of the box (4) and each said securing element (11) has a limited extension in the pull-out direction.

3. Shelf-box-system 1 according to any one of claims 1-2, in which said securing element (11) comprises a flange, which interacts with said gripping groove (9) of said box (4).

4. Shelf-box-system 1 according to any one of claims 1-3, in which said securing element (11) has a mushroom shape.

5. Shelf-box-system 1 according to any one of claims 1-4, in which said gripping groove (9) has a cross section, which at least partly follows the contour of said securing element (11).

6. Shelf-box-system 1 according to any one of claims 1-5, in which said gripping groove (9) is part of a groove (8), which extends in the pull-out direction (A) of said box (4).

7. Shelf-box-system (1) according to any one of claims 1-6, in which said box (4) is secured to said shelf (2) in its pull-out direction in its first storage/transport position by said securing arrangement (14).

8. Shelf-box-system (1) according to any one of claims 1-7, in which said box (4) is secured to said shelf (2) in its pull-out direction in its second exposure position by said securing arrangement (14).

9. Shelf-box-system (1) according to any one of claims 1-8, in which said securing arrangement (14) is a spring action device.

10. Shelf-box-system (1) according to any one of claims 1-9, in which said securing arrangement (14) is manually manoeuvrable.

11. Shelf-box-system (1) according to any one of claims 1-10, in which said securing arrangement (14) is arranged adjacent to the front edge of the shelf (2) and interacts with at least one point of arrival on the box (4).

12. Shelf-box-system (1) according to claim 11, in which said point of arrival on said box (4) is a stop (10) on the underside of said box (4).

13. Shelf-box-system (1) according to claim 11, in which said point of arrival on the box (4) is a stop (10) arranged in said groove or in said gripping groove (9) of the box (4).

14. Tool cart (16) with a shelf-box-system (1) according to any one of claims 1-13, said tool cart (16) comprising a trolley carrying a tool cupboard (17), said trolley having a frame work (19) comprising a handle (20) and wheels (22) provided on one shaft (23).

15. Tool cart (16) according to claim 14, in which said tool cart (16) is provided with at least one releasable retaining element (29) engaging said frame work (19) between said handle (20) and wheels (22), said at least one releasable retaining element (29) holding said tool cupboard (17) in place in a retained condition.

## Patentansprüche

1. Regalkastensystem (1), zum Beispiel für für ein Fracht- oder ein Laderaum-Regalsystem (7) in einem Kraftfahrzeug (6), wobei das Regalkastensystem (1) mindestens ein Regal (2) mit mindestens einem Herausziehkasten (4) darauf aufweist, wobei der Kasten (4) eine erste Lager-/Transportposition und mindestens eine zweite offene Position entlang der Herausziehrichtung des Kastens (4) hat, wobei das Regalkastensystem (1) ferner mindestens eine Absicherungseinrichtung (14) aufweist, um den Kasten (4) des Regals (2) in die Herausziehrichtung (A) abzusichern,
**dadurch gekennzeichnet, dass** der Kasten (4) mindestens eine Greifnut (9) aufweist, die sich in die Herausziehrichtung in dem unteren Bereich des Kastens (4) erstreckt, wobei die Greifnut (9) des Kastens (4) mit mindestens zwei Absicherungselementen (11) in Wechselwirkung steht, die an einer einstellbaren Entfernung in Bezug zueinander in die Herausziehrichtung des Kastens (4) eingerichtet werden können.

2. Regalkastensystem (1) nach Anspruch 1, bei dem die Absicherungselemente (11) auf dem Regal (2) an lokalen Stellen in die Herausziehrichtung des Kastens (4) eingerichtet sind und wobei jedes Absicherungselement (11) eine beschränkte Ausdehnung in die Herausziehrichtung hat.

3. Regalkastensystem (1) nach einem der Ansprüche 1 bis 2, wobei das Absicherungselement (11) einen Flansch aufweist, der mit der Greifnut (9) des Kastens (4) in Wechselwirkung steht.

4. Regalkastensystem (1) nach einem der Ansprüche 1 bis 3, wobei das Absicherungselement (11) eine Pilzform hat.

5. Regalkastensystem (1) nach einem der Ansprüche 1 bis 4, wobei die Greifnut (9) einen Querschnitt hat, der mindestens teilweise der Kontur des Absicherungselements (11) folgt.

6. Regalkastensystem (1) nach einem der Ansprüche 1 bis 5, wobei die Greifnut (9) Teil einer Nut (8) ist, die sich in die Herausziehrichtung (A) des Kastens (4) erstreckt.

7. Regalkastensystem (1) nach einem der Ansprüche 1 bis 6, wobei der Kasten (4) an dem Regal (2) in seine Herausziehrichtung in seiner ersten Lager-/Transportposition durch die Absicherungsanordnung (14) abgesichert ist.

8. Regalkastensystem (1) nach einem der Ansprüche 1 bis 7, wobei der Kasten (4) an dem Regal (2) in seine Herausziehrichtung in seiner zweiten offenen Position durch die Absicherungsanordnung (14) abgesichert ist.

9. Regalkastensystem (1) nach einem der Ansprüche 1 bis 8, wobei die Absicherungsanordnung (14) eine Federbetätigungsvorrichtung ist.

10. Regalkastensystem (1) nach einem der Ansprüche 1 bis 9, wobei die Absicherungsanordnung (14) manuell betätigt werden kann.

11. Regalkastensystem (1) nach einem der Ansprüche 1 bis 10, wobei die Absicherungsanordnung (14) neben der Vorderkante des Regals (2) eingerichtet ist und mit mindestens einer Ankunftsstelle des Kastens (4) in Wechselwirkung steht.

12. Regalkastensystem (1) nach Anspruch 11, wobei die Ankunftsstelle des Kastens (4) ein Anschlag (10) auf der Unterseite des Kastens (4) ist.

13. Regalkastensystem (1) nach Anspruch 11, wobei die Ankunftsstelle auf dem Kasten (4) ein Anschlag (10) ist, der in der Nut oder in der Greifnut (9) des Kastens (4) eingerichtet ist.

14. Werkzeugwagen (16) mit einem Regalkastensystem (1) nach einem der Ansprüche 1 bis 13, wobei der Werkzeugwagen (16) einen Transportwagen aufweist, der einen Werkzeugschrank (17) trägt, wobei der Transportwagen ein Gestell (19) hat, das einen Griff (20) und Räder (22), die auf einer Welle (23) vorgesehen sind, aufweist.

15. Werkzeugwagen (16) nach Anspruch 14, wobei der Werkzeugwagen (16) mit mindestens einem freigebbaren Rückhalteelement (29), das in das Gestell (19) zwischen dem Griff (20) und den Rädern (22) eingreift, versehen ist, wobei das mindestens eine freigebbare Rückhalteelement (29) den Werkzeugschrank (17) in einem zurückgehaltenen Zustand an Ort und Stelle hält.

## Revendications

1. Système de boîte de rangement (1), par un exemple pour un chargement ou un système d'étagères pour un espace arrière (7) dans un véhicule automobile (6), où ledit système de boîte de rangement (1) comprend au moins une étagère (2) avec au moins une boîte rétractible(4) dessus, ladite boîte (4) a une première position de stockage/transport et au moins une seconde position d'exposition le long du sens de retrait de la boîte (4), ledit système de boîte de rangement (1) comprend en outre au moins un dispositif de fixation (14) pour fixer ladite boîte (4) à ladite étagère (2) dans le sens du retrait (A) **caractérisé en ce que** ladite boîte (4) a au moins une rainure de saisie (9), qui se prolonge dans le sens de retrait dans la zone inférieure de ladite boîte (4), ladite rainure de saisie (9) de ladite boîte (4) interagit avec au moins deux éléments de fixation (11), qui peuvent être disposés à une distance réglable en rapport l'un avec l'autre dans le sens de retrait de ladite boîte (4).

2. Système de boîte de rangement (1) selon la revendication 1, dans lequel lesdits éléments de fixation (11) sont disposés sur l'étagère (2) à des emplacements locaux dans le sens de retrait de la boîte (4) et chaque dit élément de fixation (11) a une extension limitée dans le sens du retrait.

3. Système de boîte de rangement (1) selon l'une quelconque des revendications 1-2, dans lequel ledit élément de fixation (11) comprend une bride, qui interagit avec ladite rainure de saisie (9) de ladite boîte (4).

4. Système de boîte de rangement (1) selon l'une quelconque des revendications 1-3, dans lequel ledit élément de fixation (11) a une forme de champignon.

5. Système de boîte de rangement (1) selon l'une quelconque des revendications 1-4, dans lequel ladite rainure de saisie (9) a une coupe transversale, qui suit au moins partiellement le contour dudit élément de fixation (11).

6. Système de boîte de rangement (1) selon l'une quelconque des revendications 1-5, dans lequel ladite rainure de saisie (9) fait partie d'une rainure (8), qui se prolonge dans le sens de retrait (A) de ladite boîte (4).

7. Système de boîte de rangement (1) selon l'une quelconque des revendications 1-6, dans lequel ladite boîte (4) est fixée à ladite étagère (2) dans son sens de retrait dans sa première position de stockage/transport par ledit dispositif de fixation (14).

8. Système de boîte de rangement (1) selon l'une quelconque des revendications 1-7, dans lequel ladite boîte (4) est fixée à ladite étagère (2) dans son sens de retrait dans sa seconde position de stockage/transport par ledit dispositif de fixation (14).

9. Système de boîte de rangement (1) selon l'une quelconque des revendications 1-8, dans lequel ledit élément de fixation (4) est un dispositif à actionnement à ressort.

10. Système de boîte de rangement (1) selon l'une quelconque des revendications 1-9, dans lequel ledit élément de fixation (14) est manoeuvrable manuellement.

11. Système de boîte de rangement (1) selon l'une quelconque des revendications 1-10, dans lequel ledit élément de fixation (14) est disposé adjacent au bord d'avant de l'étagère (2) et interagit avec au moins un point d'arrivée de la boîte (4).

12. Système de boîte de rangement (1) selon la revendication 11, dans lequel ledit point d'arrivée sur ladite boîte (4) est une butée (10) sur le dessous de ladite boîte (4).

13. Système de boîte de rangement (1) selon la revendication 11, dans lequel ledit point d'arrivée sur la boîte (4) est une butée (10) disposée dans ladite rainure ou dans la dite rainure de saisie (9) de la boîte (4).

14. Servante d'atelier (16) avec un système de boîte de rangement (1) selon l'une quelconque des revendications 1-13, ladite servante d'atelier (16) comprenant un chariot transportant une armoire à outils (17), ledit chariot ayant une structure (19) comprenant une poignée (20) et des roues (22) munis sur un arbre (23).

15. Servante d'atelier (16) selon la revendication 14, dans laquelle ladite servante d'atelier (16) est munie d'au moins un élément de retenue relachâble (29) engageant ladite structure (19) entre ladite poignée (20) et les roues (22), ledit au moins un élément de retenue relâchable (29) en maintenant ladite armoire à outils (17) en place dans une condition retenue.
